# EUROPEAN PATENT APPLICATION

(11) **EP 3 603 824 A1**
(43) Date of publication of application: **05.02.2020**
(21) Application number: 18777069.8
(22) Date of filing: 27.03.2018
(51) Int. Cl.: B05D 5/06, B05D 5/00, B05D 7/00, B05D 7/24, B32B 27/20, B32B 27/40, C09D 5/00, C09D 7/40, C09D 201/00, G02B 1/14, G02C 7/10

(54) **METHOD FOR PRODUCING LAMINATE, LAMINATE AND HARD COATING LIQUID**

(30) Priority: 31.03.2017 JP 2017070213
(71) Applicant: Mitsui Chemicals, Inc., Minato-ku Tokyo 105-7122 (JP)
(72) Inventor: TAKAGUCHI Masayuki, Omuta-shi Fukuoka 836-8610 (JP)
(74) Representative: Mewburn Ellis LLP
(86) International application number: PCT/JP2018/012533
(87) International publication number: WO 2018/181375

(57) **Abstract**

The method of producing a laminate of the present invention includes preparing a hard coat solution including an organic dye compound represented by following General Formula (1), a solvent, and a hard coat material; applying the hard coat solution on a primer layer which is provided over at least one surface of a lens substrate; and curing the hard coat solution applied on the primer layer to form a hard coat layer, in which the solvent is at least one type selected from 1-methoxy-2-propanol, butanol, and ethylene glycol monobutyl ether.

## Description

### TECHNICAL FIELD

The present invention relates to a method of producing a laminate including an organic dye compound, a laminate, and a hard coat solution.

### BACKGROUND ART

Examples of methods for imparting desired characteristics to a plastic spectacle lens include a method of adding a function imparting agent such as an organic dye compound, a photochromic compound, or an ultraviolet light absorber to a lens substrate (a so-called in-mass method), and a method of adding a function imparting agent into a component layer to be laminated on the lens substrate.

However, in the in-mass method, for example, in a case where the plastic lens is stored for a long time on a distribution route in a state where the function imparting agent is included in the substrate, the function imparting agent may be degraded during storage such that the functionality of the function imparting agent is no longer exhibited and it may not be possible to stably produce a plastic spectacle lens to which the functionality is imparted.

On the other hand, Patent Document 1 and 2 describe a method of adding a function imparting agent into a component layer.

Patent Document 1 discloses a method of producing a hard coat layer including an organic dye compound, in which a hard coat solution including an organic dye compound, a resin, and a leveling agent is applied on a primer layer and then dried or the like.

Patent Document 2 discloses a method of producing a component layer including applying a hard coat solution containing an organic dye compound, a resin, and a solvent on a lens substrate and then dried or the like.

### RELATED DOCUMENT

### PATENT DOCUMENT

[Patent Document 1] JP2008-134618
[Patent Document 2] JP2013-61653

### SUMMARY OF THE INVENTION

### TECHNICAL PROBLEM

However, the plastic lenses obtained by the production methods described in Patent Document 1 or 2 have room for improvement in the realization of the effect of the organic dye compound.

### SOLUTION TO PROBLEM

That is, it is possible to illustrate the present invention as follows.
[1] A method of producing a laminate comprising: preparing a hard coat solution including an organic dye compound represented by following General Formula (1), a solvent, and a hard coat material; applying the hard coat solution on a primer layer which is provided over at least one surface of a lens substrate; and curing the hard coat solution applied on the primer layer to form a hard coat layer, in which the solvent is at least one type selected from 1-methoxy-2-propanol, butanol, and ethylene glycol monobutyl ether; 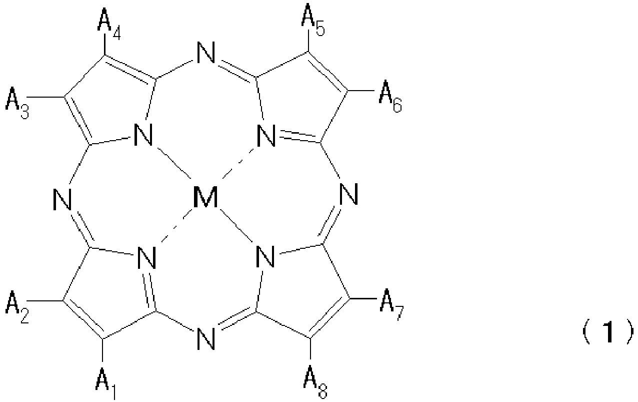 wherein, in Formula (1), each of A₁ to A₈ independently represents a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, and may form a ring excluding an aromatic ring via a linking group, and M represents two hydrogen atoms, a divalent metal atom, a divalent monosubstituted metal atom, a tetravalent disubstituted metal atom, or an oxymetal atom.
[2] The method of producing a laminate according to [1], in which the preparing the hard coat solution includes preparing a mixture liquid including the organic dye compound and the solvent, and mixing the mixture liquid with the hard coat material.
[3] The method of producing a laminate according to [1] or [2], in which the applying a hard coat solution on the primer layer includes immersing a lens substrate provided with a primer layer over at least one surface thereof in the hard coat solution.
[4] The method of producing a laminate according to any one of [1] to [3], in which the hard coat material includes at least one type of compound selected from silicon oxide; titanium oxide; zirconium oxide; tin oxide; aluminum oxide; tungsten oxide; antimony oxide; a silane compound having at least one type of functional group selected from an alkyl group, an allyl group, an alkoxy group, a methacryloxy group, an acryloxy group, an epoxy group, an amino group, an isocyanato group, and a mercapto group; and hydrolysates of the silane compounds.
[5] The method of producing a laminate according to any one of [1] to [4], in which the hard coat solution further includes at least one type selected from urethane-based resin, thiourethane-based resin, epoxy-based resin, polyester-based resin, melanin-based resin, polyvinyl acetal, and acrylic-based resin.
[6] The method of producing a laminate according to any one of [1] to [5], in which the hard coat solution further includes another function imparting agent.
[7] The method of producing a laminate according to any one of [1] to [6], in which the primer layer includes at least one type selected from urethane-based resin, thiourethane-based resin, epoxy-based resin, polyester-based resin, melanin-based resin, polyvinyl acetal, and acrylic-based resin.
[8] The method of producing a laminate according to any one of [1] to [7], in which M is a divalent copper atom in the organic dye compound represented by General Formula (1).
[9] The method of producing a laminate according to any one of [1] to [8], in which the organic dye compound is represented by following Formula (1a); 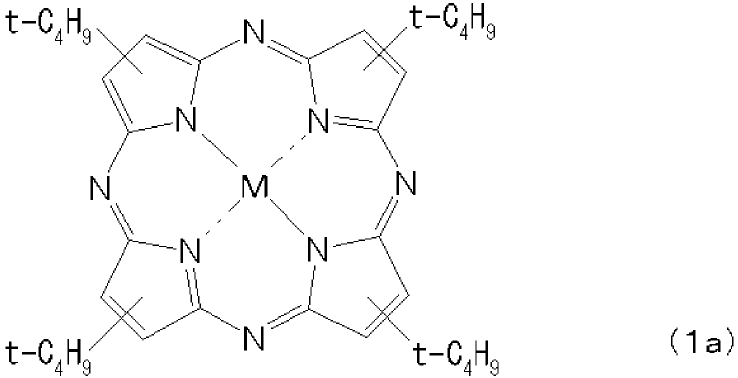 wherein, in Formula (1a), Cu represents a divalent copper atom, t-C₄H₉ represents a tertiary butyl group, and substitution positions of the four substituents each are A₁ or A₂, A₃ or A₄, A₅ or A₆, and A₇ or A₈ in Formula (1).
[10] The method of producing a laminate according to any one of [1] to [9], in which the lens substrate includes at least one type selected from poly(thio)urethane, poly(thio)urethane urea, polycarbonate, poly(meth) acrylate, polyolefin, cyclic polyolefin, polyene-polythiol polymer, ring-opening metathesis polymers, polyesters, poly(thio)ether, polyamide, and polyimide.
[11] The method of producing a laminate according to any one of [1] to [10], in which the primer layer including the organic dye compound is formed by the applying a hard coat solution.
[12] A laminate comprising; a lens substrate; a primer layer formed over at least one surface thereof of the lens substrate; and a hard coat layer formed on the primer layer and including an organic dye compound represented by following General Formula (1), in which the primer layer is provided with a region including the organic dye compound in a thickness direction from a surface in contact with the hard coat layer.
[13] A hard coat solution comprising; an organic dye compound represented by following General Formula (1) ; a solvent; and a hard coat material, in which the solvent is at least one type selected from 1-methoxy-2-propanol, butanol, and ethylene glycol monobutyl ether; 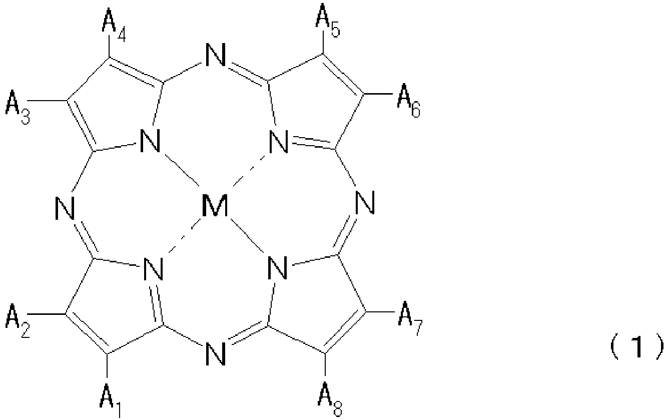 wherein, in Formula (1), A₁ to A₈ each independently represents a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, an aralkyl group having 7 to 20 carbon atoms, an aryl group having 6 to 20 carbon atoms, a heteroaryl group, an alkylthio group having 6 to 20 carbon atoms, and an arylthio group having 6 to 20 carbon atoms, and may form a ring excluding an aromatic ring via a linking group, and M represents two hydrogen atoms, a divalent metal atom, a divalent monosubstituted metal atom, a tetravalent disubstituted metal atom, or an oxymetal atom.
[14] The hard coat solution according to [13], in which the hard coat material includes at least one type of compound selected from silicon oxide; titanium oxide; zirconium oxide; tin oxide; aluminum oxide; tungsten oxide; antimony oxide; a silane compound having at least one type of functional group selected from an alkyl group, an allyl group, an alkoxy group, a methacryloxy group, an acryloxy group, an epoxy group, an amino group, an isocyanato group, and a mercapto group; and hydrolysates of the silane compounds.
[15] The hard coat solution according to [13] or [14], further including at least one type selected from urethane-based resin, thiourethane-based resin, epoxy-based resin, polyester-based resin, melanin-based resin, polyvinyl acetal, and acrylic-based resin.
[16] The hard coat solution according to any one of [13] to [15], further including another function imparting agent.
[17] The hard coat solution according to any one of [13] to [16], in which the organic dye compound is represented by Formula (1a); 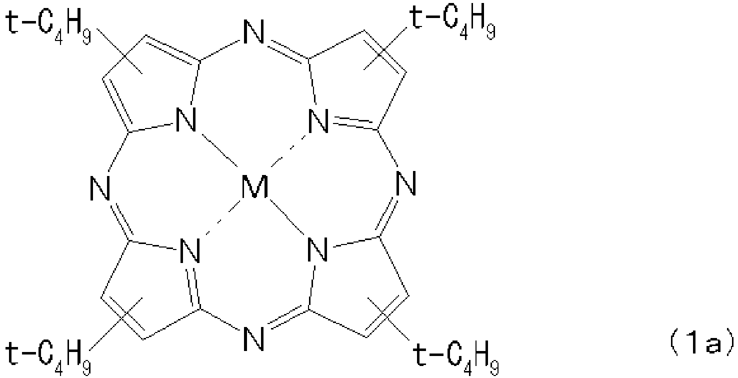 wherein, in Formula (1a), Cu represents a divalent copper atom, t-C₄H₉ represents a tertiary butyl group, and substitution positions of the four substituents each are A₁ or A₂, A₃ or A₄, A₅ or A₆, and A₇ or A₈ in Formula (1).

### ADVANTAGEOUS EFFECTS OF INVENTION

According to the method of producing a laminate of the present invention, it is possible to provide a laminate which has an excellent shielding effect for a specific wavelength. Since the laminate of the present invention is provided with a region including the organic dye compound in the primer layer, it is possible to increase the amount of the organic dye compound in the thickness direction in the functional layer and the primer layer and to improve the shielding effect for a specific wavelength. Furthermore, the solubility and storage stability of the organic dye compound in the hard coat solution of the present invention is excellent and the productivity of laminates using the hard coat solution is excellent.

### BRIEF DESCRIPTION OF THE DRAWINGS

The above and other objects, advantages and features of the present invention will be more apparent from the following description of certain preferred embodiments taken in conjunction with the accompanying drawing.

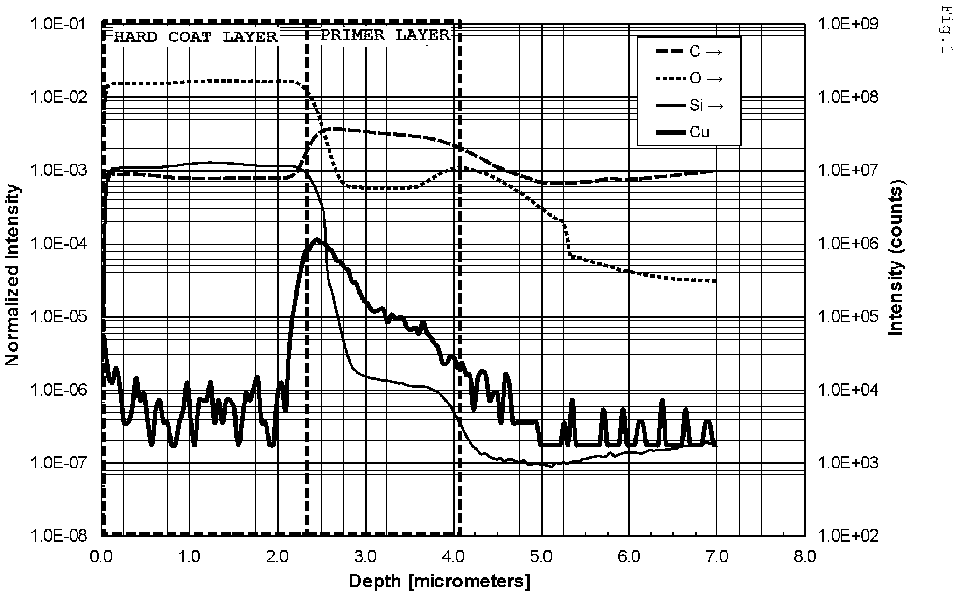

Fig. 1 is a chart showing the distribution of elements in the depth direction after measuring a lens obtained in Example 5 using secondary ion mass spectrometry.

### DESCRIPTION OF EMBODIMENTS

A specific description will be given below of the present invention based on embodiments.

The method of producing a laminate of the present embodiment includes the following steps.
Step a: A hard coat solution including the organic dye compound represented by General Formula (1), a solvent, and a hard coat material is prepared.
Step b: The hard coat solution is applied on the primer layer which is provided over at least one surface of a lens substrate.
Step c: The hard coat solution applied on the primer layer in step b is cured to form a hard coat layer.

A description will be given below of each step.

### (Step a)

In this step, the organic dye compound represented by following General Formula (1), a predetermined solvent, and a hard coat material are mixed by a method known in the related art to prepare a hard coat solution.

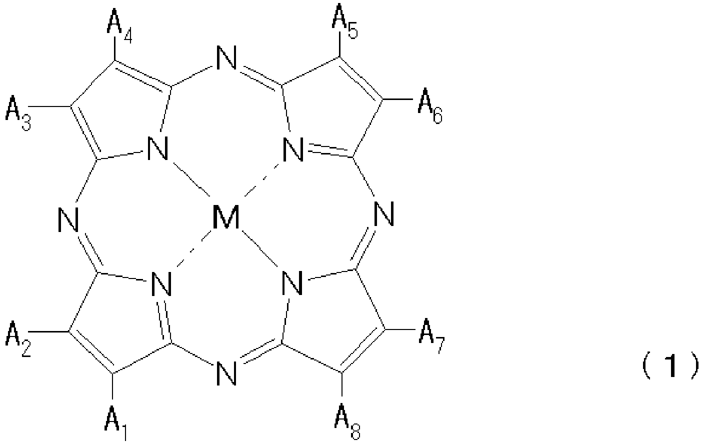

In Formula (1), each of A₁ to A₈ independently represents a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, and may form a ring excluding an aromatic ring via a linking group, and M represents two hydrogen atoms, a divalent metal atom, a divalent monosubstituted metal atom, a tetravalent disubstituted metal atom, or an oxymetal atom.

In the organic dye compound (tetraazaporphyrin compound) represented by General Formula (1), M in General Formula (1) is more preferably divalent copper. A specific example thereof is a tetra-t-butyl-tetraazaporphyrin-copper complex represented by following Formula (1a), which corresponds to the product name PD-311S (produced by Mitsui Chemicals, Inc.).

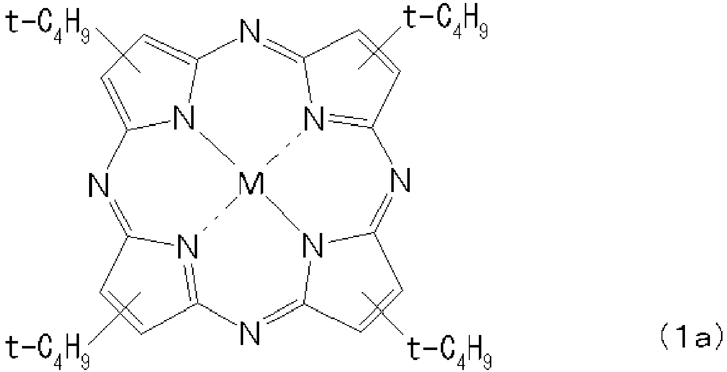

In the Formula (1a), Cu represents divalent copper and t-C₄H₉ represents a tertiary butyl group, and substitution positions of the four substituents are either of A₁ or A₂, either of A₃ or A₄, either of A₅ or A₆, or either of A₇ or A₈ in General Formula (1).

Examples of the solvent included in the hard coat solution include 1-methoxy-2-propanol, butanol, ethylene glycol monobutyl ether, water, methanol, ethanol, isopropyl alcohol, diacetone alcohol, ethylene glycol monomethyl ether, ethylene glycol monoethyl ether, ethylene glycol monopropyl ether, and the like, and preferable examples thereof include 1-methoxy-2-propanol, butanol, and ethylene glycol monobutyl ether. In the present embodiment, it is possible to use at least one type selected from the above.

In the hard coat solution of the present embodiment, including the solvent makes the solubility and storage stability of the organic dye compound of General Formula (1) excellent and improves the impregnation of the organic dye compound into the primer layer described below, thus, it is possible to provide a laminate which has an excellent shielding effect for the specific wavelength for which the organic dye compound is provided.

Examples of a hard coat material include at least one type of compound selected from silicon oxide; titanium oxide; zirconium oxide; tin oxide; aluminum oxide; tungsten oxide; antimony oxide; a silane compound having at least one type of functional group selected from an alkyl group, an allyl group, an alkoxy group, a methacryloxy group, an acryloxy group, an epoxy group, an amino group, an isocyanato group, and a mercapto group; and hydrolysates of the silane compounds.

In addition, it is possible for the hard coat solution of the present embodiment to further include another function imparting agent. Examples of other function imparting agent include anti-fogging agents, stain resistance imparting agents, water repellency imparting agents, and the like. Here, it is also possible to form various functional layers and an anti-reflective layer containing these function imparting agents over a hard coat layer.

It is possible to carry out step a specifically as follows.
(1) The organic dye compound, the solvent, and the hard coat material are mixed in one batch to prepare a hard coat solution.
(2) The organic dye compound and a solvent are mixed to prepare a mixture liquid. Then, the mixture liquid and the hard coat material are mixed to prepare a hard coat solution.
(3) The organic dye compound and a solvent are mixed to prepare a mixture liquid 1. The hard coat material and a solvent are mixed to prepare a mixture liquid 2. The mixture liquid 1 and the mixture liquid 2 are mixed to prepare a hard coat solution. The solvent included in the mixture liquid 1 and the solvent included in the mixture liquid 2 may be the same or different, but from the viewpoint of the solubility and storage stability of the organic dye compound, both preferably include the solvent described above.

Step a is preferably performed according to the (2) or (3) described above. By preparing the mixture liquid 1 by mixing the organic dye compound with the solvent in advance, the dispersibility of the organic dye compound is further improved, and it is possible to obtain a hard coat solution in which the solubility and storage stability of the organic dye compound is superior.

In the mixture liquid 2 used in (3) described above, examples of the hard coat material include hard coat material-containing solutions MP-1154D, MP-1179, and the like produced by SDC Technologies Inc., including the metal oxide described above and the hydrolysate of the silane compound described above.

It is possible for the hard coat solution to further include a resin such as a urethane-based resin, a thiourethane-based resin, an epoxy-based resin, a polyester-based resin, a melanin-based resin, a polyvinyl acetal, and an acrylic-based resin. Due to this, the adhesiveness between the hard coat layer and the primer layer is superior.

From the viewpoint of the effect of the present invention, it is possible to use the solvent in an amount of 1 to 1,000,000 parts by weight with respect to 1 part by weight of the organic dye compound, preferably 5 to 100,000 parts by weight, and more preferably 10 to 10,000 parts by weight. Here, in (3) described above, in a case where the mixture liquid 2 also includes the solvent described above, the amount is the total amount of the solvent described above included in the mixture liquid 1 and the mixture liquid 2.

In addition, from the viewpoint of the effect of the present invention, it is possible for the hard coat solution obtained in step a to include 10 to 5,000 ppm of the organic dye compound, preferably 20 to 2,000 ppm, and more preferably 50 to 1,000 parts by weight.

In a case where a resin is included, it is possible to use the organic dye compound in an amount of 1 × 10⁻⁸ to 1 × 10⁻¹ parts by weight with respect to 1 part by weight of the resin, preferably 1 × 10⁻⁷ to 1 × 10⁻² parts by weight, and more preferably 1 × 10⁻⁶ to 5 × 10⁻³ parts by weight.

In addition, a curing agent may be included for the purpose of promoting curing. Specific examples of curing agents include inorganic acids, organic acids, amines, metal complexes, organic acid metal salts, metal chlorides, and the like.

### (Step b)

In this step, a lens substrate provided with a primer layer over at least one surface thereof is used.

It is possible to use glass and plastic lens substrates as lens substrates. It is possible for the plastic lens substrate to include at least one type selected from poly(thio)urethane, poly(thio)urethane urea, polysulfide, epoxy, polycarbonate, poly(meth) acrylate, ADC (allyl diglycol carbonate), polyolefin, cyclic polyolefin, polyene-polythiol polymer, ring-opening metathesis polymers, polyesters, poly(thio)ethers, polyamides, and polyimides, without being limited thereto.

The primer layer is formed by, for example, an application method or a drying method. In the application method, the primer composition is applied by a known application method such as spin coating or dip coating, and then solidified to form a primer layer. In the drying method, the primer layer is formed by a known drying method such as a CVD method or a vacuum evaporation method. When forming the primer layer, a pretreatment such as an alkali treatment, a plasma treatment, or an ultraviolet light treatment may be performed on the surface of the lens, as necessary, for the purpose of improving adhesion.

It is also possible to use the primer composition without a solvent, but a suitable solvent which does not influence the lens may be used for a purpose such as adjusting the viscosity of the composition.

The primer layer formed from the primer composition preferably has high adhesion to the lens substrate and includes at least one type selected from urethane-based resins, thiourethane-based resins, epoxy-based resins, polyester-based resins, melanin-based resins, polyvinyl acetals, acrylic-based resins, and the like. When the primer layer includes such a resin, the impregnation of the organic dye compound is excellent, and therefore, it is possible to provide a laminate excellent in the shielding effect for the specific wavelength for which the organic dye compound is provided.

In the present embodiment, the hard coat solution is applied on the primer layer of the lens substrate provided with a primer layer over at least one surface thereof. Examples of application methods include methods such as a spin coating method, a dip coating method, a flow coating method, and a spray coating method.

In this step, the organic dye compound included in the hard coat solution is impregnated into the primer layer, and a region including the organic dye compound is formed in the thickness direction of the primer layer from the surface in contact with the hard coat layer.

Since the hard coat solution in the present embodiment includes the organic dye compound represented by General Formula (1) in combination with the solvent, the impregnation property of the organic dye compound to the primer layer including the resin is remarkably improved.

In the present embodiment, the immersion method is preferable from the viewpoint of the effect of the present invention. A primer layer provided with the region including the organic dye compound is efficiently formed.

### (Step c)

The hard coat solution applied on the primer layer in step b is cured to form a hard coat layer.

Examples of curing methods include dry curing, heat curing, curing methods using energy beam irradiation such as ultraviolet light and visible light, and the like. In the case of heat curing, the curing is preferably carried out at 80 to 120°C for 1 to 4 hours. In order to suppress the generation of interference fringes, the refractive index of the hard coat layer is preferably a refractive index for which the difference in refractive index with the molded product is in the range of ±0.1.

It is possible to laminate various layers such as an anti-reflective layer which suppresses the reflectance to further improve the transparency, a water repellent layer which imparts a slippery property, or a hydrophilic layer and a water absorbing layer which impart anti-fogging properties.

Furthermore, processes or the like for imparting various functions may be performed such as a dyeing treatment for imparting fashionability may be performed, a treatment such as surface and edge polishing may be performed, and furthermore, inserting a polarizing film to the inside or attaching a polarizing film to the surface for the purpose of imparting polarization.

The laminate obtained by the production method of the present embodiment is provided with a lens substrate, a primer layer formed over at least one surface of the lens substrate, and a hard coat layer including an organic dye compound formed on the primer layer.

In the production method of the present embodiment, the organic dye compound included in the hard coat solution is impregnated into the primer layer, and a laminate containing the organic dye compound in any of the hard coat layer and the primer layer is obtained. That is, the laminate of the present embodiment is provided with a region including the organic dye compound in the primer layer and it is possible to increase the amount of the organic dye compound included in the thickness direction of the functional layer and the primer layer, thus, it is possible to sufficiently exhibit the shielding effect for the specific wavelength for which the organic dye compound is provided.

### [Uses]

It is possible to use the laminate of the present embodiment for various types of plastic lenses such as plastic spectacle lenses, goggles, spectacle lenses for vision correction, lenses for imaging devices, Fresnel lenses for liquid crystal projectors, lenticular lenses, and contact lenses.

As above, although the present invention was illustrated using an embodiment, the present invention is not limited to the embodiment above and it is possible to adopt various aspects in a range in which the effect of the present invention is not impaired.

In addition, it is also possible to form another layer between the primer layer and the hard coat layer as long as the effects of the present invention are not affected.

### [Examples]

A specific description will be given below of the present invention based on Examples, but the present invention is not limited to these examples. In the Examples, the following hard coat material-containing liquid was used.

MP-1154D (SDC Technologies Inc.) : As a solvent, water, methanol, ethanol, and 1-methoxy-2-propanol is included.

MP-1179 (SDC Technologies Inc.) : As a solvent, water, methanol, ethanol, and 1-methoxy-2-propanol is included.

In addition, the measurement of the physical properties in the Examples was performed as follows.

### [Light Transmittance at 585 nm]

The transmittance was measured using a spectrophotometer (UV-1800, produced by Shimadzu Corporation).

### [Measurement of Constituent Elements of Layer]

The distribution of the constituent elements (C, O, Si, Cu) in the thickness direction of the layer was measured using a secondary ion mass spectrometer (product name IMS 7f, produced by CAMECA).

### [Production Example 1]

9.9 parts by weight of 1-methoxy-2-propanol (PGM) were added to 0.1 parts by weight of an organic dye compound (PD-311S, produced by Mitsui Chemicals, Inc.) represented by Formula (1a), the mixture was stirred for 3 hours at 25°C, and a PD-311S master batch (1) was produced.

### [Production Example 2]

9.9 parts by weight of ethylene glycol mono n-butyl ether (EGBE) were added to 0.1 parts by weight of PD-311S (produced by Mitsui Chemicals, Inc.), the mixture was stirred for 3 hours at 25°C, and a PD-311S master batch (2) was produced.

### [Example 1]

While stirring 400 parts by weight of a hard coat material-containing solution MP-1154D (produced by SDC Technologies Inc.), 9.82 parts by weight, 4.85 parts by weight, and 2.42 parts by weight of PD-311S master batch (1) were each added thereto, the mixtures were stirred for 1 hour at 25°C, and hard coat solutions (1), (2), and (3) were respectively obtained. The concentrations of PD-311S in the hard coat solutions (1), (2), and (3) are 240 ppm, 120 ppm, and 60 ppm, respectively. In each hard coat solution, PD-311S was completely dissolved. Even after one day after dissolution, precipitation of the PD-311S was not observed, and it was confirmed that the storage stability of the organic dye compound was excellent.

### [Example 2]

While stirring 400 parts by weight of a hard coat material-containing solution MP-1154D (produced by SDC Technologies Inc.), 9.82 parts by weight, 4.85 parts by weight, and 2.42 parts by weight of PD-311S master batch (2) were each added thereto, the mixtures were stirred for 1 hour at 25°C, and hard coat solutions (4), (5), and (6) were respectively obtained. The concentrations of PD-311S in the hard coat solutions (4), (5), and (6) are 240 ppm, 120 ppm, and 60 ppm, respectively. In each hard coat solution, the PD-311S was completely dissolved. Even after one day after dissolution, precipitation of the PD-311S was not observed, and it was confirmed that the storage stability of the organic dye compound was excellent.

### [Example 3]

While stirring 400 parts by weight of a hard coat material-containing solution MP-1179 (produced by SDC Technologies Inc.), 9.82 parts by weight, 4.85 parts by weight, and 2.42 parts by weight of PD-311S master batch (1) were each added thereto, the mixtures were stirred for 1 hour at 25°C, and hard coat solutions (7), (8), and (9) were respectively obtained. The concentrations of the PD-311S in the hard coat solutions (7), (8), and (9) are 240 ppm, 120 ppm, and 60 ppm, respectively. In each hard coat solution, the PD-311S was completely dissolved. Even after one day after dissolution, precipitation of the PD-311S was not observed, and it was confirmed that the storage stability of the organic dye compound was excellent.

### [Example 4]

While stirring 400 parts by weight of a hard coat material-containing solution MP-1179 (produced by SDC Technologies Inc.), 9.82 parts by weight, 4.85 parts by weight, and 2.42 parts by weight of PD-311S master batch (2) were each added thereto, the mixtures were stirred for 1 hour at 25°C, and hard coat solutions (10), (11), and (12) were respectively obtained. The concentrations of PD-311S in the hard coat solutions (10), (11), and (12) are 240 ppm, 120 ppm, and 60 ppm, respectively. In each hard coat solution, the PD-311S was completely dissolved. Even after one day after dissolution, precipitation of the PD-311S was not observed, and it was confirmed that the storage stability of the organic dye compound was excellent.

### [Example 5]

A 10% aqueous solution of sodium hydroxide was added to a container provided with an ultrasonic generator. A lens substrate (diethylene glycol diallyl carbonate (product name CR-39)) was immersed in the solution, and irradiated with ultrasonic waves at 50°C for 5 minutes. After ultrasonic wave irradiation, the lens substrate was taken out and washed with running water for 3 minutes to remove the aqueous solution of sodium hydroxide attached to the surface.

Subsequently, the lens substrate was immersed in a container, in which an ion exchange water is filled, provided with an ultrasonic generator, and irradiated with ultrasonic waves at 45°C for 3 minutes. After ultrasonic wave irradiation, the lens substrate was taken out, dried by heating with a ceramic heater, and left to stand at room temperature for 5 minutes or more to cool the lens substrate.

Next, a primer coat solution PR-1165 (resin component: urethane-based resin, produced by SDC Technologies Inc.) was added to a container, and the lens substrate was immersed therein. The primer coat solution was applied on a lens substrate using a tabletop dip coating apparatus DT-0303-S3 (produced by SDI) at a pulling speed of 2.0 mm/sec. Subsequently, after the lens substrate was left to stand in an oven at 80°C for 10 minutes to dry, the lens substrate was left to stand at room temperature for 5 minutes or more for cooling.

Next, the hard coat solution (1) was added to a container, and the lens substrate having the primer coat applied thereto was immersed therein. The hard coat solution was applied on the lens with a primer layer using a tabletop dip coating apparatus DT-0303-S3 (produced by SDI) at a pulling speed of 2.0 mm/sec. Subsequently, after the lens was left to stand in an oven at 110°C for 3 hours to dry, the lens was left to stand at room temperature for 5 minutes or more for cooling.

When the light transmittance at 585 nm of the lens, in which the obtained primer layer and hard coat layer were laminated, was measured, the light transmittance was 37.9%. The results are shown in Table 1. Furthermore, the measurement results of the distribution of the constituent elements of the layer in this lens are shown in Fig. 1.

### [Examples 6 to 9]

Lenses in which a primer layer and a hard coat layer were laminated were prepared in the same manner as in Example 5 except that the primer coat solution and the hard coat solution were changed to those shown in Table 1, and the light transmittance at 585 nm was measured. The results are shown in Table 1.

### [Comparative Examples 1 and 2]

Lenses in which a hard coat layer was laminated were prepared in the same manner as in Example 1 except that the primer coat was not applied and the hard coat solution was changed to the solutions shown in Table 1, and the light transmittance at 585 nm was measured. The results are shown in Table 1.

When Examples 5 to 9 and Comparative Examples 1 and 2 were compared, the light transmittance at 585 nm was lower in the Example using the lens provided with the primer layer. As shown in Fig. 1, the primer layer was provided with a region including a high concentration of the organic dye compound in the thickness direction from the surface in contact with the hard coat layer, and it was confirmed that the organic dye compound is included not only in the hard coat layer but also in the primer layer.

### [Table 1]

**Table 1**

| | Primer coat solution | Hard coat solution | Hard coat material-containing solution | PD-311S concentration in hard coat solution [ppm] | PD-311S master batch solvent | Light transmittance at 585 nm [%] |
|---|---|---|---|---|---|---|
| Example 5 | PR-1165 | (1) | MP-1154D | 240 | PGM | 37.9 |
| Example 6 | PR-1165 | (7) | MP-1179 | 240 | PGM | 41.1 |
| Example 7 | PR-1165 | (8) | MP-1179 | 120 | PGM | 60.6 |
| Example 8 | PR-1165 | (11) | MP-1179 | 120 | EGBE | 59.8 |
| Example 9 | PR-1135 | (11) | MP-1179 | 120 | EGBE | 41.9 |
| Comparative Example 1 | --- | (1) | MP-1154D | 240 | PGM | 74.4 |
| Comparative Example 2 | --- | (11) | MP-1179 | 120 | EGBE | 80.4 |

| | | | | | | |
|---|---|---|---|---|---|---|
| PGM: 1-methoxy-2-propanol EGBE: ethylene glycol mono n-butyl ether | | | | | | |

This application claims priority based on Japanese Patent Application No. 2017-070213 filed on March 31, 2017, the entire disclosure of which is incorporated herein.

## Claims

1. A method of producing a laminate comprising:
preparing a hard coat solution including an organic dye compound represented by following General Formula (1), a solvent, and a hard coat material;
applying the hard coat solution on a primer layer which is provided over at least one surface of a lens substrate; and
curing the hard coat solution applied on the primer layer to form a hard coat layer,
wherein the solvent is at least one type selected from 1-methoxy-2-propanol, butanol, and ethylene glycol monobutyl ether; 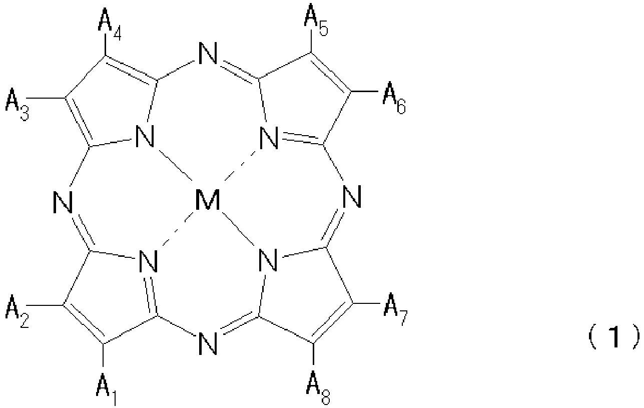 wherein, in Formula (1), each of A₁ to A₈ independently represents a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, an aralkyl group having 7 to 20 carbon atoms, an aryl group having 6 to 20 carbon atoms, a heteroaryl group, an alkylthio group having 6 to 20 carbon atoms, or an arylthio group having 6 to 20 carbon atoms, and may form a ring excluding an aromatic ring via a linking group, and M represents two hydrogen atoms, a divalent metal atom, a divalent monosubstituted metal atom, a tetravalent disubstituted metal atom, or an oxymetal atom.

2. The method of producing a laminate according to claim 1,
wherein the preparing the hard coat solution includes
preparing a mixture liquid including the organic dye compound and the solvent, and
mixing the mixture liquid with the hard coat material.

3. The method of producing a laminate according to claim 1 or 2,
wherein the applying a hard coat solution on the primer layer includes immersing a lens substrate provided with a primer layer over at least one surface thereof in the hard coat solution.

4. The method of producing a laminate according to any one of claims 1 to 3,
wherein the hard coat material includes at least one type of compound selected from silicon oxide; titanium oxide; zirconium oxide; tin oxide; aluminum oxide; tungsten oxide; antimony oxide; a silane compound having at least one type of functional group selected from an alkyl group, an allyl group, an alkoxy group, a methacryloxy group, an acryloxy group, an epoxy group, an amino group, an isocyanato group, and a mercapto group; and hydrolysates of the silane compounds.

5. The method of producing a laminate according to any one of claims 1 to 4,
wherein the hard coat solution further includes at least one type selected from urethane-based resin, thiourethane-based resin, epoxy-based resin, polyester-based resin, melanin-based resin, polyvinyl acetal, and acrylic-based resin.

6. The method of producing a laminate according to any one of claims 1 to 5,
wherein the hard coat solution further includes another function imparting agent.

7. The method of producing a laminate according to any one of claims 1 to 6,
wherein the primer layer includes at least one type selected from urethane-based resin, thiourethane-based resin, epoxy-based resin, polyester-based resin, melanin-based resin, polyvinyl acetal, and acrylic-based resin.

8. The method of producing a laminate according to any one of claims 1 to 7,
wherein M is a divalent copper atom in the organic dye compound represented by General Formula (1).

9. The method of producing a laminate according to any one of claims 1 to 8,
wherein the organic dye compound is represented by following Formula (1a); 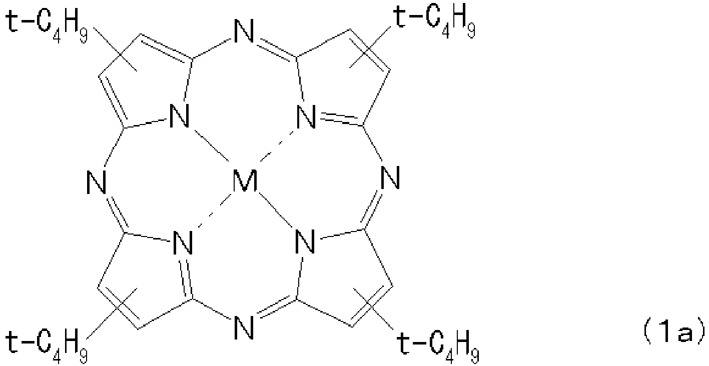 wherein, in Formula (1a), Cu represents a divalent copper atom, t-C₄H₉ represents a tertiary butyl group, and substitution positions of the four substituents each are A₁ or A₂, A₃ or A₄, A₅ or A₆, and A₇ or A₈ in Formula (1).

10. The method of producing a laminate according to any one of claims 1 to 9,
wherein the lens substrate includes at least one type selected from poly(thio)urethane, poly(thio)urethane urea, polycarbonate, poly(meth) acrylate, polyolefin, cyclic polyolefin, polyene-polythiol polymer, ring-opening metathesis polymers, polyesters, poly(thio)ether, polyamide, and polyimide.

11. The method of producing a laminate according to any one of claims 1 to 10,
wherein the primer layer including the organic dye compound is formed by the applying a hard coat solution.

12. A laminate comprising:
a lens substrate;
a primer layer formed over at least one surface of the lens substrate; and
a hard coat layer formed on the primer layer and including an organic dye compound represented by following General Formula (1),
wherein the primer layer is provided with a region including the organic dye compound in a thickness direction from a surface in contact with the hard coat layer.

13. A hard coat solution comprising:
an organic dye compound represented by following General Formula (1) ;
a solvent; and
a hard coat material,
wherein the solvent is at least one type selected from 1-methoxy-2-propanol, butanol, and ethylene glycol monobutyl ether; 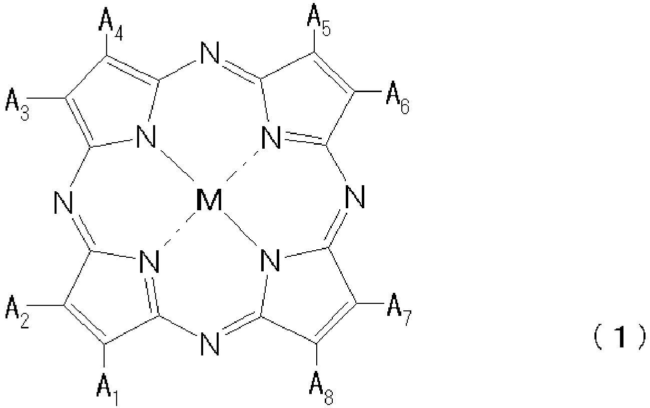 wherein, in Formula (1), A₁ to A₈ each independently represents a hydrogen atom, a halogen atom, a nitro group, a cyano group, a hydroxy group, an amino group, a carboxyl group, a sulfonic acid group, a linear, branched, or cyclic alkyl group having 1 to 20 carbon atoms, an alkoxy group having 1 to 20 carbon atoms, an aryloxy group having 6 to 20 carbon atoms, a monoalkylamino group having 1 to 20 carbon atoms, a dialkylamino group having 2 to 20 carbon atoms, an aralkyl group having 7 to 20 carbon atoms, an aryl group having 6 to 20 carbon atoms, a heteroaryl group, an alkylthio group having 6 to 20 carbon atoms, and an arylthio group having 6 to 20 carbon atoms, and may form a ring excluding an aromatic ring via a linking group, and M represents two hydrogen atoms, a divalent metal atom, a divalent monosubstituted metal atom, a tetravalent disubstituted metal atom, or an oxymetal atom.

14. The hard coat solution according to claim 13,
wherein the hard coat material includes at least one type of compound selected from silicon oxide; titanium oxide; zirconium oxide; tin oxide; aluminum oxide; tungsten oxide; antimony oxide; a silane compound having at least one type of functional group selected from an alkyl group, an allyl group, an alkoxy group, a methacryloxy group, an acryloxy group, an epoxy group, an amino group, an isocyanato group, and a mercapto group; and hydrolysates of the silane compounds.

15. The hard coat solution according to claim 13 or 14, further comprising:
at least one type selected from urethane-based resin, thiourethane-based resin, epoxy-based resin, polyester-based resin, melanin-based resin, polyvinyl acetal, and acrylic-based resin.

16. The hard coat solution according to any one of claims 13 to 15, further comprising:
another function imparting agent.

17. The hard coat solution according to any one of claims 13 to 16,
wherein the organic dye compound is represented by Formula (1a) ; 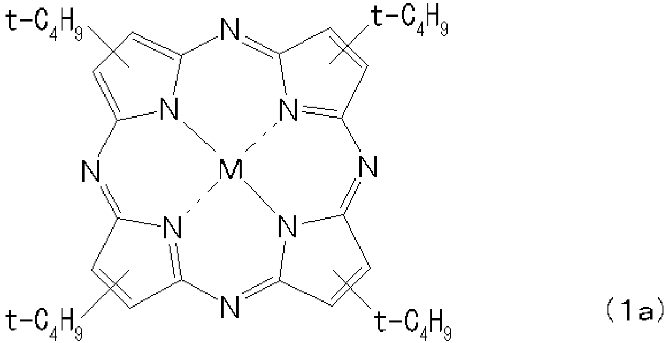 wherein, in Formula (1a), Cu represents a divalent copper atom, t-C₄H₉ represents a tertiary butyl group, and substitution positions of the four substituents each are A₁ or A₂, A₃ or A₄, A₅ or A₆, and A₇ or A₈ in Formula (1) .
